# EUROPÄISCHE PATENTSCHRIFT

(11) **EP 1 899 105 B1**
(45) Veröffentlichungstag und Bekanntmachung des Hinweises auf die Patenterteilung: **18.05.2011**
(21) Anmeldenummer: 06723795.8
(22) Anmeldetag: 29.03.2006
(51) Int. Cl.: B23K 26/36

(54) **VERFAHREN ZUR HERSTELLUNG VON DREIDIMENSIONAL STRUKTURIERTEN OBERFLÄCHEN UND VORRICHTUNG ZUR DURCHFÜHRUNG DES VERFAHRENS**
METHOD FOR PRODUCING THREE-DIMENSIONALLY STRUCTURED SURFACES AND APPARATUS FOR CARRYING OUT THE METHOD
PROCÉDÉ POUR PRODUIRE DES SURFACES STRUCTURÉES EN TROIS DIMENSIONS ET APPAREIL POUR METTRE EN OEUVRE LA MÉTHODE

(30) Priorität: 18.05.2005 DE 102005022696
(43) Veröffentlichungstag der Anmeldung: 19.03.2008
(73) Patentinhaber: Benecke-Kaliko AG, 30419 Hannover (DE)
(72) Erfinder: OHLINGER, Rainer, 76547 Sinzheim (DE); VOGT, Günter, 31737 Rinteln (DE); WOLFF, Roland, 30926 Seelze (DE)
(74) Vertreter: Finger, Karsten
(86) Internationale Anmeldenummer: PCT/EP2006/002826
(87) Internationale Veröffentlichungsnummer: WO 2006/122606

(56) Entgegenhaltungen:
- WO-A-2005/030430
- DE-A1- 4 324 970
- DE-A1- 10 116 672
- US-A1- 2002 189 471
- US-B1- 6 337 749

## Beschreibung

Die Erfindung betrifft ein Verfahren zur Herstellung von dreidimensional strukturierten Oberflächen von Gegenständen und eine Vorrichtung zur Durchführung des Verfahrens, wobei im Wesentlichen unbegrenzte Gegenstandsoberfläche mit Hilfe eines Bearbeitungswerkzeuges als Reproduktion einer dreidimensional strukturierten endlichen und durch Ränder begrenzten Originaloberfläche (Mustervorlage) erzeugt wird, und bei dem zunächst die Topologie der Originaloberfläche mit Hilfe eines Abtastverfahrens ermittelt wird und die so ermittelten und im Wesentlichen aus den zu jedem Flächenelement der Originaloberfläche gehörigen Höhen bestehenden topologischen Daten zur elektronischen Steuerung eines Bearbeitungswerkzeug, vorzugsweise eines Lasers, zur Bearbeitung der dreidimensional strukturierten Gegenstandsoberfläche genutzt werden.

Verfahren zur Lasergravur von Oberflächen natürlicher oder synthetischer Mustervorlagen sind bereits bekannt. Sie weisen jedoch alle Mängel in der Qualität der reproduzierten Oberflächenstruktur auf.

Die DE 43 24 970 A1 offenbart ein Verfahren zur Herstellung von dreidimensional strukturierten Oberflächen einer Prägewalze zum kontinuierlichen Prägen der Oberfläche einer thermoplastischen Folie, wobei die Oberfläche der Prägewalze die Negativform der zu prägenden Oberfläche darstellt. Benutzt wird diese Technik für die Herstellung von thermoplastischen Folien als Ersatz für natürliche und in ihrer Struktur hoch komplexe Oberflächen, wie z.B. feinporiges und mit einer ausgeprägten Narbstruktur versehenes Rindsleder, Büffelleder, etc. Hierbei wird zunächst mit Hilfe einer Lasergravur die Oberfläche einer Positivform bearbeitet, wobei der Laser(-strahl) dabei durch elektrisch / elektronisch gespeicherte Daten gesteuert wird, die vorher mit Hilfe einer optischen oder mechanischen Abtastung der Originaloberfläche erhalten wurden. Ein solches abtragendes Lasergravurverfahren kann man einerseits dazu nutzen, um eine Prägewalze direkt und ohne das Erfordernis weiterer Zwischenschritte herzustellen. Andererseits läßt ein solches Verfahren auch eine "indirekte Herstellung zu. Dazu wird der Laserstahl auf die Umfangsfläche einer Walze / Hilfswalze gerichtet, auf deren Oberfläche eine Positivstruktur / Positivtextur der Originaloberfläche eingearbeitet wird. Der Laserstrahl wird dabei als Werkzeug relativ zur Walzenoberfläche bewegt. Danach wird von der Walzenoberfläche ein Abdruck aus Silikonkautschuk genommen, der die Form eines Schlauches besitzt, und zu der sogenannten Prägetochter vulkanisiert. Diese Prägetochter wird dann von der Hilfswalze abgezogen, indem das Innere des (Silikon-) Schlauches nach außen gekrempelt wird. Die innere und nun nach außen gekrempelte äußere Oberfläche der Prägetochter weist nun wieder eine Negativform der Originaloberfläche auf. Die so umgekrempelte Prägetochter wird nun auf eine Druckwalze / Prägewalze aufgezogen. Die Prägewalze wird danach mit einer abstützenden Gegenwalze zu einem Walzengerüst zusammengestellt. Mit einem solchen Walzengerüst / Walzstuhl kann dann eine thermoplastische Folie kontinuierlich und in "Endlosbahnen" geprägt werden, deren Oberfläche die gleiche Positivform wie die Originaloberfläche besitzt.

Hierbei wird mit einer optischen oder mechanischen Abtastung der Oberfläche der Mustervorlage (Originaloberfläche) natürlich nur eine begrenzte Fläche abgetastet, beispielsweise ein mehr oder minder großes Stück Büffelleder. Bei der abtragenden Laser-Bearbeitung zur Herstellung der Prägewalze wird die so erhaltene Oberflächeninformation vielfach wiederholend aneinandergefügt, wodurch beim kontinuierlichen Prägen nachteiligerweise Übergänge oder Grenzbereiche sichtbar werden. Eine genaue Lehre zur Modulation des Laserstahles im Hinblick auf die exakte dreidimensionale Oberflächenreproduktion ist ebenfalls nicht beschrieben, weder im Hinblick auf die Abtastung, noch in Bezug auf die Bearbeitung der Prägewalzen.

Die DE 43 26 874 A1 offenbart ein Verfahren zur Gravur eines Musters in die Oberfläche eines Werkstücks, bei der ebenfalls mit Hilfe einer optischen oder mechanischen Abtastung einer Oberfläche einer Mustervorlage eine Oberflächeninformation in Form von elektrischen Steuersignalen erzeugt und gespeichert wird, die dann zur Steuerung des Gravurlasers genutzt wird. Hierbei wird im Bereich der Übergänge oder Stöße die dort von der Mustervorlage gewonnene Oberflächeninformation als gleiches Muster mehrfach hintereinander auf das Werkstück graviert. Auch ist offenbart, die gleiche Oberflächeninformation mehrfach und/oder abwechselnd in umgekehrte Informationsfolge - also vorwärts und rückwärts - zu gravieren, also auch mit einer gewissen Zufälligkeit aufzubringen. Durch solche Verfahren werden die Übergänge zwar etwas weicher, bleiben aber nach wie vor sichtbar.

Die genannten Verfahren zur Herstellung von Prägewalzen zum kontinuierlichen Prägen der Oberfläche einer thermoplastischen Folie oder zur Gravur eines Musters in die Oberfläche eines Werkstücks können selbstverständlich zur Herstellung von sogenannten Zwischenoriginalen mit einer positiven und der Originaloberfläche entsprechenden Struktur bzw. Textur genutzt werden, von denen dann wieder Negativabgüsse erstellt werden, welche schließlich zur Einprägung einer positiven Textur / Struktur auf der Oberflächen des Endproduktes genutzt werden können.

Es ist jedoch ebenso möglich, wie dies z. B. die DE 44 41 216 A1 beschreibt, ein solches abtragendes Lasergravurverfahren zu nutzen, um eine Prägewalze direkt und ohne das Erfordernis weiterer Zwischenschritte herzustellen. Dabei wird ein Laserstrahl auf die aus Silikongummi bestehende Umfangsfläche einer Prägewalze gerichtet und relativ zur Umfangsfläche so bewegt, daß eine Oberflächenstruktur einer Mustervorlage als Negativform direkt in die Außenfläche der Prägewalze gebrannt wird. Auch bei diesem Verfahren sind die Übergänge, wie sie aus dem aneinander setzen der Originaloberfläche entstehen, optisch erkennbar und qualitätsmindernd.

Die DE 34 05 985 A1 beschreibt eine Vorrichtung und ein Verfahren zum kontinuierlichen Prägen einer thermoplastischen Folie, insbesondere auch die Herstellung einer zugehörigen Prägewalze, bei dem die Topologie der Originaloberfläche mit Hilfe eines Abdruckverfahrens erfasst wird. Hierbei wird zunächst von der Originaloberfläche ein Abdruck aus Silikonkautschuk genommen. Der Abdruck, dies ist die sogenannte Prägemutter, wird vulkanisiert und von der Originaloberfläche abgezogen. Aufgrund der endlichen Abmessungen der Originalvorlage ist auch dieser erste Abdruck, die Prägemutter, in ihren Abmessungen begrenzt und typischerweise länglich bzw. streifenförmig.

Mit dieser Prägemutter, deren Oberfläche nun eine Negativform der Originaloberfläche darstellt, wird nun die Oberfläche einer im Wesentlichen in ihren Abmessungen vergleichbaren thermoplastische Folie geprägt, und unter Anwendung von Druck und Hitze fixiert. Die Oberfläche dieser thermoplastischen Folie besitzt nun wieder die Positivform der Originaloberfläche.

Mehrere Stücke dieser thermoplastischen Folie, also mehrere "Abdrucke" werden nun aneinandergefügt. Die entstehenden Stoßkantenbereiche müssen danach unter Druck und Hitze mit der Prägemutter überprägt werden, um den Übergang im Nahtbereich an die Struktur und an das Aussehen der übrigen Fläche anzupassen. So erstellt man aus einer größeren Anzahl von Einzelstücken eine länglich-rechteckige thermoplastische Folie. Diese Folie wird dann mit ihren Längsseiten aneinander anstoßend zu einem Schlauch / zu einem Zylinder geformt. Die durch die Längsseiten gebildete Naht wird dann ebenfalls unter Druck und Hitze mit der Prägemutter überprägt, um die entstehende Stoßnaht möglichst unsichbar zu machen.

Eine andere Methode besteht darin, streifenförmige thermoplastische Folie z. B. auf einer Hilfswalze schraubenförmig so zu einem Schlauch aufgewickelt, dass die Seitenbereiche unter Bildung von Stumpfnähten aneinanderstoßen. Die schraubenförmigen Nähte Nahtbereiche werden dann unter Druck und Hitze mit der Prägemutter überprägt, um den Übergänge anzupassen.

Es entstehen also in beiden Fällen ein Schlauch oder ein Zylinder aus thermoplastischer Folie mit einer Außenoberfläche, die die Positivform der Originaloberfläche mit einem hervorragenden Informationsgehalt besitzt. Dieser Schlauch wird dann auf eine Hilfswalze aufgebracht.

Auf diese mit dem Schlauch aus thermoplastischer Folie versehene Hilfswalze wird nun noch einmal Silikonkautschuk aufgetragen und somit von der Außenoberfläche erneut ein Abdruck genommen, der die Form eines Schlauches besitzt. Dies ist wieder die sogenannte Prägetochter, die ebenfalls vulkanisiert und dann von der mit thermoplastischer Folie versehenen Hilfswalze durch Umkrempeln abgezogen wird, wie oben bereits beschrieben.

Die innere und nun nach außen gekrempelte Oberfläche der Prägetochter weist nun wieder eine Negativform der Originaloberfläche und wird in der bereits geschilderten Weise auf eine Druckwalze / Prägewalze aufgezogen, mit der dann die Folienbahnen geprägt werden.

Der übertragene "informationsgehalt" ist bei solchen Abdruckverfahren hoch, d.h. erkennbar höher als bei üblichen Lasergravurverfahren und erzeugt eine hochwertige und der Originaloberfläche außerordentlich ähnliche Reproduktionsoberfläche: Allerdings sind die Walzenoberflächen und die Oberflächen der geprägten Folienbahnen trotz aller Bemühungen nicht frei von sichtbaren Übergangsbereichen, welche durch das Aneinandersetzen von Teilstücken zu einer Prägewalzenoberfläche entstehen. Diese Übergangsbereiche können durch die bisher bekannten Hilfsmaßnahmen, wie z. B. dem nachträglichen Überprägen, nicht vollständig beseitigt werden.

Die DE 34 39 822 A1, eine Teilanmeldung aus der DE 34 05 985 A1, beschreibt ein im Prinzip ebenso ausgebildetes Verfahren zur Herstellung einer Kunststoffolie mit einer Narbung, insbesondere einer natürlich wirkenden Ledernarbung, bei der die letztlich entstandene Kunststoffolie und die Prägetochter, d.h. der letzte und der vorletzte Schritt des bereits geschilderten Verfahrens, durch Aufgießen oder Aufstreichen, anschließende Vulkanisieren und Abziehen erfolgt.

Auch die zu diesem Schutzrechtskomplex gehörige EP 0 154 141 B1 offenbart im Grunde das bereits durch die beiden oben genannten Schriften dargestellte Verfahren und beschränkt sich lediglich auf die Herstellung der Prägewalze.

Bei den in den drei vorgenannten Veröffentlichungen dargestellten Verfahren besteht neben den sichtbaren Übergangsbereichen der Nachteil, dass durch das vielfache wechselnde Abgießen / Umformen in Positiv- und Negativformen ein hoher Aufwand und sorgfältigstes und damit zeitintensives Arbeiten und das häufige Verwenden von Trennmittel erforderlich ist, wenn man alle feinen Vertiefungen und Poren der Originaloberfläche, d.h. der Narbungsvorlage, reproduzieren will.

Die Behebung der Nachteile in Bezug auf die Verwendung von Trennmitteln ist das Ziel in einem Verfahren, welches die EP 1 238 789 B1 offenbart. Hier handelt es sich um ein Verfahren zur Herstellung einer Prägewalze aus Silikonkautschuk, deren Prägeoberfläche eine im Vergleich zur Oberfläche des Originales / der Mustervorlage negative Oberflächentextur / Struktur aufweist. Hierbei wird zunächst mit Hilfe eines Laserbearbeitungsverfahrens die Oberfläche einer Hilfswalze bearbeitet. Die Oberfläche besteht dabei aus Nitrylbutadienkautschuk. Ein abtragender Laserstahl wird auf die Umfangsfläche der Hilfswalze gerichtet. Der Laserstrahl bewegt sich relativ zu letzterer und wird von den als Daten vorliegenden Oberflächeninformationen einer Originaloberfläche / Mustervorlage so gesteuert, dass eine der Mustervorlage entsprechende Positivstruktur / Positivtextur in der Oberfläche der Hilfswalze entsteht. Danach wird von der Hilfswalze ein Abdruck aus Silikonkautschuk genommen, der die Form eines Schlauches besitzt, und zu der sogenannten Prägetochter vulkanisiert. Die beiden Werkstoffe Nitrylbutadienkautschuk und Silikonkautschuk können relativ leicht und ohne Verwendung von Trennmitteln getrennt werden. Im weiteren wird so verfahren, wie oben bereits geschildert. Die Prägetochter wird abgezogen, indem das mit Negativstruktur / Negativtextur versehene Innere des (Silikon-) Schlauches nach außen gekrempelt wird und schließlich auf eine Druckwalze / Prägewalze aufgezogen.

Allen bisher bekannten Verfahren haftet der Nachteil an, dass die Qualität der dreidimensionalen Reproduktion der Originaloberfläche in ihrer naturgetreuen Wiedergabe unzureichend ist.

Dies vor allen Dingen deshalb, weil zum einen die Stoßkanten bzw. Übergangsbereiche, wie sie durch Aneinandersetzung von begrenzten Teilbereichen zur Generierung einer Prägewalzenoberfläche entstehen, nicht mit ausreichender Qualität unsichtbar gemacht werden können, und weil zum Anderen durch das Aneinandersetzen solcher Teilbereiche in diesen durch unterschiedliche Lichtreflexion bzw. Lichtbrechung eine schachbrettartige Bilderung in der erzeugten Oberfläche entsteht. Dies wird z.B. von den Abnehmern hochwertig beschichteter Waren, d.h. den Herstellern von Gegenständen aus Lederimitat, Armaturenbrettern, von Handtaschen, Koffern oder Möbeln, nicht akzeptiert.

Die als Alternative sich präsentierenden Lasergravurverfahren herkömmlicher Art sind bisher aber noch nicht geeignet, einen ausreichend hohen Informationsgehalt einer Oberfläche einer komplexen Vorlage so auf eine reproduzierte Oberfläche zu übertragen, dass eine original-identische Reproduktionsoberfläche erscheint.

Darüberhinaus entstehen auch hier trotz aller Bemühungen, wie etwa rechnerische Musterumkehr, manuelle Glättung der Randbereiche etc, sichtbare Übergangsbereiche.

Die WO 2005/03040 A1 offenbart ein Verfahren zum Materialabtrag einer beliebig geformten dreidimensionalen Oberfläche mittels eines Laserwerkzeuges, bei dem die Oberfläche mit einem mathematischen Modell näherungsweise beschrieben und dann mit einem Polygonnetz belegt wird, wobei letzterem Werte für Tiefenabmessungen zugeordnet werden.

Die US 6,337,749 B1 offenbart ein Verfahren zum Erzeugen eines Steuerungssignals für eine Vorrichtung zum Oberflächenabtrag, bei dem eine synthetische topologische Struktur entsteht durch die zufällige Bildung von durch Linien begrenzten Vielecken und durch die Zuordnung einer Tiefen- bzw. Höhenstruktur für das jeweilige Vieleck.

Die DE 101 16 672 A1 offenbart ein Verfahren zur Materialbearbeitung von Werkstücken, bei dem Feinbereiche bzw. Feinstrukturen einer Bearbeltungsschicht mit einem Laserstrahl einer gesteuerten Laserstrahlquelle und Grobstrukturen mit einer Aushebevorrichtung, beispielsweise mit einem Gravierstichel bearbeitet werden. Die Grobbearbeitungsstrukturen werden dabei mit Hilfe eines Algorithmus aus den Feinbearbeitungsstrukturen gewonnen.

Die US 2002/0189471 offenbart ein Verfahren zur Herstellung einer Druckmatritze, bei dem mit Hilfe eines Laserstrahles auf bestimmten Spuren ein unterschiedlicher Materialabtrag erfolgt und die Sprünge oder Zwischenräume zwischen den Spuren ebenfalls abtragend bearbeitet werden.

Diese letztgenannten Verfahren sind zur Herstellung einer original-identischen Reproduktion einer Musterfläche nur bedingt geeignet und lassen ebenfalls sichtbare Übergangsbereiche bei einer Vervielfältigung einer Vorlage entstehen.

Für die Erfindung bestand also die Aufgabe, ein Verfahren zur Herstellung von dreidimensional strukturierten Oberflächen bereitzustellen, welches zu einer in höchstem Maße naturgetreuen Reproduktion einer Musteroberfläche führt, und welches zur jedwedem natürlichen oder gestalteten Muster bzw. jedweder Originaloberfläche, auch von kleinen Mustern, eine übergangs- und randfreie sowie beliebige vergrößerte Reproduktion bzw. Vervielfältigung ohne Rapportbildung und Moulettenstreifen erlaubt.

Gelöst wird diese Aufgabe durch die Merkmale des Hauptanspruchs. Weitere vorteilhafte Ausbildungen sind in den Unteransprüchen erfasst. Ebenfalls offenbart ist eine besonders geeignete Verwendung des erfindungsgemäßen Verfahrens sowie eine besonders geeignete Vorrichtung zur Durchführung des erfindungsgemäβen Verfahrens.

Bei dem erfindungsgemäßen Verfahren wird zunächst ein erster Datensatz mit der Topologie einer begrenzten Originaloberfläche abgespeichert, wobei der Datensatz aus den gemessenen Höheninformationen der jeweils zugehörigen Flächenelemente der Originaloberfläche besteht.

Der Begriff "Höheninformation" beinhaltet ein Maß In vertikaler Richtung, also im Wesentlichen senkrecht oder "normal" zur Fläche und ist hier- je nach Bezugspunkt - bedeutungsgleich zu verstehen mit Höhenkoordinate, Tiefeninformation, oder Tiefenkoordinate.

Danach wird ein anderer, ein "zweiter" Datensatz erzeugt und abgespeichert, der ähnlich wie der erste Datensatz aus Höheninformationen und zugehörigen Flächenelementen besteht. Dieser Datensatz beruht jedoch nicht auf gemessenen Größen, sondern beinhaltet zufällig erzeugte Daten. Es sind dies also Höhen- und Flächeninformationen, die aus zufällig ermittelten Daten erzeugt werden. Damit entsteht eine zufällig erzeugte Topologie, die, wenn man so will, einer "synthetischen" Fläche entspricht. Der "zweite" Datensatz besteht also aus zufällig erzeugten Höheninformationen für jeweils zugehörige "Flächenelemente".

Diese mit Hilfe zufällig erzeugter Daten charakterisierte "synthetische" Fläche ist hier als "nicht begrenzte Reproduktionsoberfläche" bezeichnet. Die Bestimmung "nicht begrenzt" unterscheidet die entstehende Reproduktionsfläche von der tatsächlichen Originalvorlage oder -fläche, welche ja in irgendeiner Form begrenzt, d.h. endlich oder mit Rändern versehen ist. Man denke hier etwa an eine Originalvorlage in Form eines handtuchgroßen Büffellederflickens, aus dem der- unbegrenzt und ohne Rand - vorhandene Bezugsstoff einer Sofaoberfläche entstehen soll.

Der Begriff "Reproduktionsoberfläche" bezeichnet dabei zunächst noch nicht die fertige und original-identische Oberfläche des zu bearbeitenden Gegenstandes, also noch nicht die letztlich mit Hilfe der Bearbeitungswerkzeuge gestaltete Gegenstandsoberfläche, sondern ein "Zwischenprodukt" welches noch bearbeitet und in ein fertiges Endprodukt überführt werden muß.

Die Reproduktionsoberfläche ist hier also zunächst eine Art synthetisches Zwischenoriginal einer Fläche, das erst in mehreren Verarbeitungsschritten zur fertigen Reproduktionsfläche weiterverarbeitet werden muß. Erst nach den nachfolgend beschriebenen verfahrensgemäßen Verarbeitungsschritten entsteht nämlich die "fertige" Reproduktionsoberfläche, die nach dem letzten Verarbeitungsschritt die original-identische Gegenstandsoberfläche repräsentiert, bzw. die die zur entsprechenden Steuerung eines Bearbeitungswerkzeuges erforderlichen Daten bereitstellt.

Um dieses Ziel zu erreichen, besteht der nächste Verfahrensschritt (c) nun darin, dass um eine erste-wie oben dargestellt zufällig erzeugte - Höheninformation der Reproduktionsoberfläche, d.h. um einen beliebig ausgewählten ersten "Punkt" der Reproduktionsoberfläche, mehrere benachbarte zufällige Höheninformationen zu einer ersten Teilmenge zusammengefasst und in einem dritten Datensatz gespeichert werden, wobei Lage und Anordnung der benachbarten Höheninformationen durch die Koordinaten der jeweils zugehörigen Flächenelemente der Reproduktionsoberfläche ebenfalls gespeichert werden. Der dritte Datensatz beinhaltet somit Daten der Reproduktionsoberfläche.

Danach wird dieser dritte Datensatz mehrfach mit einem bei jedem neuen Vergleich mit neuen Daten belegten vierten Datensatz verglichen, wobei in dem vierten Datensatz eine zweite Teilmenge benachbarter gemessener Höheninformationen der Originaloberfläche sowie durch die Koordinaten der jeweils zugehörigen Flächenelemente auch die Lage und Anordnung der benachbarten Höheninformationen der Originaloberfläche gespeichert ist sind. Der vierte Datensatz beinhaltet somit Daten der Originaloberfläche.

Es findet sodann ein Vergleich der Umgebungen, der Nachbarschaften als solche auf der "synthetischen" Fläche und der Originaloberfläche statt, wobei die Struktur der Nachbarschaften möglichst ähnlich oder gleich ist. Die "Nachbarschaften", dies ist festzuhalten, bestehen aus jeweils benachbarten Höheninformationen um einen Betrachtungspunkt - ebenfalls eine Höheninformation - gespeichert als Datensatz in der ersten und zweiten Teilmenge.

Beim Erreichen einer festgelegten Ähnlichkeit zwischen der Höheninformation der ersten und den Höheninformationen der zweiten Teilmengen wird sodann die erste zufällige Höheninformation der Reproduktionsoberfläche, d.h. der Höhenwert für den ersten betrachteten "Punkt" der Reproduktionsoberfläche, ersetzt durch eine zweite Höheninformation der Originaloberfläche, die in ihrer Lage und Anordnung in Bezug auf die zweite Teilmenge der Lage und Anordnung der ersten Höheninformation in Bezug auf die erste Teilmenge entspricht.

Hierdurch wird also in diesem Verfahrensschritt (e) ein Höhenwert für einen ersten "Punkt" der Reproduktionsoberfläche ersetzt durch einen Höhenwert eines anderen, eine zweiten "Punktes" auf der Originaloberfläche. Das Kriterium für die Auswahl des "Ersatzwertes" sind dabei "passende" Nachbarschaften aus der Reproduktionsfläche und der Originalfläche, passend nämlich im Hinblick auf ihre Höheninformationen und in Bezug zu ihrer Lage zum ersten und zweiten Punkt in der Reproduktions- und Originaloberfläche. Die "Umgebungs-Teilmenge" (Datensatz 3) aus der Reproduktionsfläche wird also verglichen mit der "Umgebungs-Teilmenge" aus der Originaloberfläche (Datensatz 4). Soweit schon Höheninformationen aus einem vorlaufenden Verarbeitungschritt vorliegen, werden auch diese, wie unten geschildert, in das Kriterium für die Auswahl des "Ersatzwertes" mit einbezogen.

Die Verfahrensschritte c) bis e) werden danach so oft mit unterschiedlichen ersten und zweiten Teilmengen durchgeführt und wiederholt, bis alle Punkte, d.h. alle Höheninformationen der Reproduktionsoberfläche sukzessive abgearbeitet und durch Höheninformationen aus der Originaloberfläche ersetzt sind (Verfahrensschritt "f"). Mit jeder Wiederholung wird dann die Reproduktionsfläche der Originaloberfläche ähnlicher, insbesondere dann, wenn zum Vergleich der Teilmengen im Verfahrensschritt d) die bereits mit Hilfe eines oder mehrerer vorlaufenden Verfahrensschritte in der Reproduktionsoberfläche ersetzten Höheninformationen mit in die erste Teilmenge zur Durchführung des Verfahrensschrittes c) aufgenommen werden.

Hierbei ist es wichtig, sich vor Augen zu halten, dass die Reproduktionsfläche in der Regel wesentlich größer ist als die Originaloberfläche, sodass die in ihrer Anzahl "wenigen" Punkte oder Höheninformationen der Originaloberfläche durch das erfindungsgemäße Verfahren mehrfach, d.h. etwa wie natürlich wachsend, auf der Reproduktionsoberfläche verteilt werden.

Der weitere Widerspruch, der sich zunächst ergibt, wenn man überlegt, dass sukzessive alle Punkte eine Reproduktionsfläche ersetzt werden sollen, bei der es sich per definitionem doch um ein "unbegrenzte" Fläche handelt, verschwindet, wenn man beispielsweise den letzten Punkt am rechten Rand (Ende) der Fläche als Nachbarschaft des ersten Punktes am linken Rand (Anfang) der Fläche betrachtet. Es handelt sich dann um eine in sich geschlossene und somit ebenso unbegrenzte Fläche.

Nach einem Ersatz aller Höheninformationen der Reproduktionsoberfläche durch Höheninformationen der Originaloberfläche im Verfahrensschritt f) werden die Verfahrensschritte a) bis f) ein oder mehrere weitere Male durchlaufen, wobei die den Höheninformationen jeweils zugehörigen Flächenelemente bei jedem weiteren Durchlauf verkleinert, insbesondere halbiert werden, und wobei im Verfahrensschritt e) als gleichzeitiges weiteres Kriterium das Erreichen einer festgelegten Ähnlichkeit zwischen der neuerlichen ersten Teilmenge und den bereits im vorgehenden Durchlauf der Verfahrensschritte a) bis f) gespeicherten benachbarten Höheninformationen geprüft wird.

Dieser zusätzliche Vergleich mit den im jeweils vorgehenden Durchlauf "gefundenen" und gespeicherten benachbarten Höheninformationen kann natürlich erst durchgeführt werden, wenn bereits ein vorlaufender Durchlauf vorhanden war.

Dadurch wird die Betrachtung immer feiner und die beiden Flächen immer ähnlicher. Dies wird solange durchgeführt wird wiederholt, bis die gesamte Reproduktionsoberfläche eine festgelegte Ähnlichkeit zur Originaloberfläche aufweist. Begrenzt ist dieser als "Auflösungspyramide" an sich bekannte Verfahrensschritt (Verkleinerung / Verdoppelung der Fächenelemente, Vergleich mit den vorher erzielten Ergebnissen) lediglich durch die zur Verfügung stehende Zeit, bzw. die Kapazität der vorhandenen Datenverarbeitung.

Unter "festgelegter" Ähnlichkeit ist hier kein Festwert oder Grenzwert/ Schwellwert als solcher zu verstehen, sondern ein Auswahl- und Bestimmungskriterium, welches mit Hilfe von bekannten und hier nicht näher zu erläuternden statistischen Verfahren und Verteilungsgesetzmäßigkeiten durchgeführt wird.

Erst danach werden die Höheninformationen der Reproduktionsoberfläche für die Steuerung des Bearbeitungswerkzeuges zur Bearbeitung der Gegenstandsoberfläche zur Verfügung gestellt. Die sich nun als "fertig" darstellende Reproduktionsoberfläche kann in aller Regel und bei geeigneten Materialien nicht mehr von der Original oberfläche unterschieden werden.

Durch das erfindungsgemäße Verfahren entsteht als Reproduktionsfläche / Gegenstandsfläche nämlich keine identische Kopie der Originalfläche, wie sie z.B. sich durch ein Foto ergeben würde, sondern eine in Ihren Eigenschaften, in ihrem Erscheinungsbild, und in ihren "natürlich" und zufällig gewachsenen Strukturen beliebig vergrößerbare Oberfläche, die völlig ohne Moulettenstreifen und Rapport als "Weiterführung" der Originaloberfläche erscheint. Der unvorbelastete Betrachter meint, die Originaloberfläche vor sich zu haben und wird zwischen Original- und Gegenstandsoberfläche keine Unterscheidung treffen können. Insofern ist der Begriff "original-identische Oberfläche" im Weiteren und im vorliegenden Zusammenhang nicht als identische Kopie, sondern wie beschrieben als "Weiterführung" der Originaloberfläche zu verstehen.

Sinnvollerweise / vorteilhafterweise nutzt man bei der Durchführung des Verfahrens automatische digitale Abtastverfahren, um die Topologie der Originaloberfläche zu ermitteln. Deren Meßwerte lassen sich leicht in comptergestützten Einrichtungen / Elektronenrechnern verarbeiten. Insgesamt ist das Verfahren natürlich auf eine schnelle elektronische Datenverarbeitung angewiesen, um mit vertretbarem Zeitaufwand zu Ergebnissen zu kommen. Praktisch ist es aber auch durchführbar mit Hilfe z.B. eines Rauhigkeitsmeßgerätes (Perthometer) zur Ermittlung der Höheninformation, mit Hilfe manuell und optisch ermittelter Datensätze, und mit Hilfe einer geeigneten form- oder speicherbaren Oberflächenstruktur eines Reproduktionsoberflächenmodells.

Eine weitere vorteilhafte Ausbildung des Verfahrens besteht darin, dass die nicht begrenzte Reproduktionsoberfläche als torodiale Fläche ausgebildet ist, d.h. als Torus oder Zylinder mit überall definierten Anschlußfunktionen, insbesondere als Oberfläche eines ringförmigen Torus mit im wesentlichen Kreisquerschnitt. Hierdurch erhält auf einfache Weise und lediglich durch Festlegen einer Schnittlinie und durch "Aufklappen" des ringförmigen Torus die Form einer zylindrischen Walze und damit eine Gegenstandsoberfläche, die in idealer Weise als Oberfläche eines Berbeitungswerkzeuges geeignet ist, nämlich z. B. als Oberfläche einer Prägewalze zum Prägen von Folienbahnen.

Eine weitere vorteilhafte Ausbildung des Verfahrens besteht darin, dass die durch die Koordinaten der jeweils zugehörigen Flächenelemente bestimmte Lage und Anordnung der benachbarten Höheninformationen der Reproduktionsoberfläche und der Originaloberfläche als L-förmige Anordnung der benachbarten Höheninformationen ausgebildet ist. Hierdurch wird der Nachbarschaftsvergleich auf einfache Weise und mit einem Minimum an Daten dadurch verbessert, dass Informationen aus zwei Richtungen mit in die Verarbeitung einbezogen werden. Selbstverständlich kann jede beliebige andere Anordnung von Nachbarschaftsfeldern gewählt werden, beispielsweise eine kreisförmige Anordnung der benachbarten Höheninformationen, die besonders geeignet wäre, um etwa nachträglich einzelne kleine Fehlstrukturen einer Reproduktionsfläche zu überarbeiten.

Eine weitere vorteilhafte Ausbildung des Verfahrens besteht darin, dass das Abtasten der Topologie der Originaloberfläche mit Hilfe optischer Verfahren erfolgt, bei denen optische Daten in elektrische Größen umgeformt werden. Mit optischen Verfahren lassen sich beliebig genaue Messungen abhängig von den Wellenlängen des genutzten Lichtes durchführen.

Eine weitere vorteilhafte Ausbildung des Verfahrens besteht darin, dass das Abtasten mit Hilfe eines Lichtmessverfahrens erfolgt, vorzugsweise mit einem dreidimensionalen Abtasten mit Hilfe eines Interferometers. Ein solches Abtastverfahren weist eine Genauigkeit in lateraler und vertikaler Richtung auf, die ausreichend ist, z.B. eine Lederhaut mit ihren feinen Haarporen ausreichend genau zu vermessen. Vorteilhafterweise erfolgt hierzu die Höhenmessung mit einer vertikalen Auflösung von 2 bis 100 nm und die laterale Abtastung mit Auflösung von 1 bis 100 µm, vorzugsweise mit einer lateralen Auflösung von 5 bis 40 µm.

Eine weitere vorteilhafte Ausbildung des Verfahrens besteht darin, dass die dreidimensional strukturierte Gegenstandsoberfläche invers zur Originaloberfläche ausgebildet ist. Durch eine solche Umkehrung der aus dem erfindungsgemäßen Verfahren ermittelten Höheninformationen / Daten läßt sich eine Werkzeug herstellen, beispielsweise eine Walze, die die Negativform einer Original-identischen Oberfläche aufweist und die damit direkt zum Prägen von Folienmaterialien verwendet werden kann.

Eine weitere vorteilhafte Ausbildung des Verfahrens besteht darin, dass die den jeweils zugehörigen Flächenelementen zugeordneten Höheninformationen in Form von Farbinformationen für die einzelnen Flächenelemente umgeformt und gespeichert werden, insbesondere in Form von Grauwerten für die einzelnen Flächenelemente, und bei dem nach Durchführung der Verfahrensschritte a) bis f) die Farbinformationen bzw. die Grauwerte der Reproduktionsoberfläche in korrespondierende Höheninformationen umgeformt und für die Steuerung des Bearbeitungswerkzeuges zur Bearbeitung der Reproduktion zur Verfügung gestellt werden. Hierdurch ergeben sich Vereinfachungen in der Speicherung der Höheninformationen, die dann beispielsweise lediglich zweidimensional erfolgen kann.

Eine weitere vorteilhafte Ausbildung des Verfahrens besteht darin, dass die Koordinaten der für die Steuerung des Bearbeitungswerkzeuges genutzten Höheninformationen der Reproduktionsoberfläche bzw. die Lage und Anordnung der jeweils zugehörigen Flächenelemente in den Flächenbereichen verdichtet oder gedehnt werden, in denen bei einem späteren Bearbeitungs- oder Umformungsvorgang eine Dehnung oder Stauchung der Gegenstands- oder Bearbeitungsoberfläche / Folienoberfläche erfolgt. Dadurch, dass die Daten zur Steuerung des Bearbeitungswerkzeuges in digitaler Form vorliegen und trotzdem zur Originaloberfläche identisch sind, lassen sich die Daten relativ einfach mit einem "offset", also einem regelmäßigen und gleichartigen Zuschlagswert versehen, der nachträgliche Verformungen kompensiert und auch im verformten Bereich eine original-identische Oberfläche aufweist.

Eine besonders geeignete Verwendung des erfindungsgemäßen Verfahrens besteht in der Herstellung von stoßkantenfreien Dekor-Oberflächen auf Folien, insbesondere auf thermoplastischen und/oder elastomeren Polymerfolien oder polymerbeschichteten Flächengebilden bei denen die Dekoroberfläche mit Hilfe der Gegenstandsoberfläche geprägt wird.

Hierbei ist die Reproduktionsoberfläche als geschlossene, insbesondere torodiale Walzenoberfläche ausgebildet ist, wobei zunächst die dreidimensional strukturierte Gegenstandsoberfläche mit Hilfe eines Lasers als Bearbeitungswerkzeug in eine mit einer Außenschicht aus Polymermaterial versehene Hilfswalze eingebracht wird, die damit die Positivform der Originaloberfläche erhält.

Danach wird auf diese Hilfswalze eine Schicht aus Silikonkautschuk aufgetragen und vulkanisiert, wodurch ein Schlauch aus Silikonkautschuk entsteht. Dieser Schlauch aus Silikonkautschuk wird dann von der Hilfswalze abgezogen, indem das Innere des (Silikon-) Schlauches nach außen gekrempelt wird.

Anschließend wird der so umgekrempelte und mit der Negativform der Originaloberfläche auf der Außenseite versehene Silikonschlauch als Prägeschlauch auf eine Druckwalze / Prägewalze aufgezogen, wonach mit der so entstandenen Druckwalze / Prägewalze die Oberfläche der Folie geprägt wird.

So erhält man eine Prägewalze / ein Prägewerkzeug, mit dem sich in einem kontinuierlichen Prägeverfahren ein große Menge an Folienbahn herstellen läßt, welche mit einer original-identischen Oberfläche versehen ist.

Eine weitere besonders geeignete Verwendung des erfindungsgemäßen Verfahrens besteht in der Herstellung von Prägewalzen für thermoplastische Folien. Hierbei ist die Reproduktionsoberfläche als Walzenoberfläche ausgebildet, wobei die dreidimensional strukturierte Gegenstandsoberfläche invers zur Originaloberfläche ausgebildet ist und mit Hilfe eines Lasers als Bearbeitungswerkzeug direkt in eine Außenschicht eines zylindrischen Körpers eingebracht wird, der damit auf seiner Außenseite die Negativform der Originaloberfläche erhält, wonach mit der Außenoberfläche des zylindrischen Körpers die Oberfläche der Folie geprägt wird. Hierdurch entfallen weitere nachfolgende Abzugs- oder Abdruckverfahren für das Herstellen von Prägetöchtern.

Eine weitere vorteilhafte Ausbildung des Verfahrens besteht darin, dass die inverse Oberfläche direkt in eine Außenschicht einer Prägewalze als zylindrischem Körper eingebracht wird. Damit ist die Herstellung eine Prägeoberfläche einer Prägewalze in nur einem Arbeitsschritt möglich.

Eine weitere vorteilhafte Ausbildung des Verfahrens besteht darin, dass der zylindrische Körper als Hohlzylinder ausgebildet ist, der auf eine entsprechende Druckwalze / Prägewalze aufgezogen wird. Damit können leichte Hohlwalzen (Sleeves) hergestellt werden, die leicht transportiert und gelagert werden können und auf die eigentlichen Walzenkörper aufgezogen werden.

Ebenfalls ist eine besonders geeignete Vorrichtung zur Durchführung des Verfahrens offenbart, wobei die Vorrichtung einen CO₂-Gas-Laser als Bearbeitungswerkzeug sowie eine Steuerungseinrichtung zur Steuerung der Intensität eines zur Bearbeitung einer Walzenoberfläche ausgerichteten Laserstrahls aufweist, dadurch gekennzeichnet; dass die Steuerungseinrichtung eine erste Steuereinheit aufweist zur Regelung und Konstanthaltung der Intensität/Energie des Laserstrahles, und dass die Steuerungseinrichtung eine nachgeschaltete zweite Steuereinheit aufweist zur Modulation der Intensität des geregelten Laserstrahles in Abhängigkeit von den Höheninformationen der Reproduktionsoberfläche. Erst durch die Ausbildung einer solchen doppelten Steuereinheit ist es möglich, einen Laser mit den verfahrensgemäß aufbereiteten Höheninformationen für die Bearbeitung der Gegenstandsoberfläche zu steuern. Die Genauigkeit der Höheninformationen verlangt nämlich eine außerordentlich genaue Steuerung der Laserintensität. Dies ist überraschenderweise erst und nur dann zu erreichen, wenn der Laserstrahl zunächst völlig konstant in seiner Leistung gehalten wird, wenn nämlich sämtliche auch noch so kleine Einflüße durch die Einschaltdauer, Temperatur, durch Resonatorveränderungen etc. durch eine erste Steuereinheit kompensiert sind. Erst dann kann mit brauchbarem Ergebnis durch eine zweite Steuereinheit die Intensität des Lasers entsprechend den Höheninformationen angesteuert werden. Der hier eingesetzte CO₂-GasLaser ist mit seiner Wellenlänge von etwa 10 µm besonders geeignet für die Bearbeitung von Polymermaterialien.

Natürlich lassen sich auch andere Arten von Lasern für die Bearbeitung der Oberfläche nach dem erfindungsgemäßen Verfahren benutzen, z. B. Festkörperläser wie der Nd:Yag Laser. Diese Festkörperlaser sind in Bezug auf die Wärmestabilität längst nicht so kritisch wie die Gaslaser. Die Regelung der Laserintensität nach den Höheninformationen wäre bei solchen Festkörperlasern somit im Grunde einfacher und auch mit nur einer Steuerungseinrichtung zu erreichen. Die Wellenlängen solcher Festkörperlaser (ca. 1 µm bei Nd:Yag-Lasern) passen aber nicht immer zu den Eigenschaften des zu bearbeitenden Materials, hier eines Polymermaterials, sodass letzteres z. B. durch Rußzugaben angepasst werden muß, um die Absorptionsfähigjkeit für diese Wellenlängen zu erhöhen. Grundsätzlich kommt es bei der Auswahl des Lasers auf die erreichbare Gravurqualität an, die zum einen von der Laserstrahlqualität zum anderen von dem Abbrandverhalten des zu bearbeitenden Materials bestimmt wird.

Eine weitere vorteilhafte Ausbildung der Vorrichtung besteht darin, dass die erste Steuereinheit so aufgebaut ist, dass ein Teil des Laserstrahles ausgespiegelt und abhängig von der Intensität/Energie des ausgespiegelten Teiles des Laserstrahles die Eingangsleistung des Lasers gesteuert wird. Hierdurch erreicht man eine direkt wirkende Rückkopplung zur Konstanthaltung des Laserstrahles.

Eine weitere vorteilhafte Ausbildung der Vorrichtung besteht darin, dass die nachgeschaltete zweite Steuereinheit zur Regelung der Laserintensität einen Teil des geregelten Laserstrahles ausspiegelt, wobei die zweite Steuereinheit zur Modulation der Intensität des geregelten Laserstrahles als Gitter ausgebildet ist, welches abhängig von Schwingungen seine Durchlässigkeit ändert. Ein solcher an sich bekannter akusto-optischer Modulator ist in diesem Fall aufgrund seines empfindlichen Steuerungs- und Übertragungsverhaltens in Verbindung mit dem exakt in seiner Intensität konstant gehaltenen Laserstrahl bestens geeignet, die durch das erfindungsgemäße Verfahren aufbereiteten Höheninformationen für die Bearbeitung der Gegenstandsoberfläche in Form einer Beeinflussung der Laserintensität aufzumodulieren.

Die Ausspiegelung erfolgt in einen sogenannten Laser-Dump, d.h. in einen Energievernichter oder schlichtweg "Mülleimer", sodass die Intensität des durch die erste Steuereinheit vorgeregelten "Rohstrahles" durch einfache Energieveränderung den Höheninformationen entsprechend geregelt wird.

Hierdurch läßt sich beispielsweise in hervorragender Weise eine Silikonoberfläche auf einer Prägewalze oder einer Hilfswalze mit einem Laserstrahl bearbeiten, der durch den Resonator eines CO₂-Gaslasers erzeugt wird. Die Steuerungseinrichtung weist üblicherweise hierzu auch einen oder mehrere Sensoren zur Ermittlung der Temperatur des Laserresonators auf. Der in der ersten Steuereinrichtung hinter dem Laserresonator ausgespiegelte Teil des Laserstrahles beträgt hierbei etwa 1 bis 2 % der Gesamtenergie des Laserstrahles.

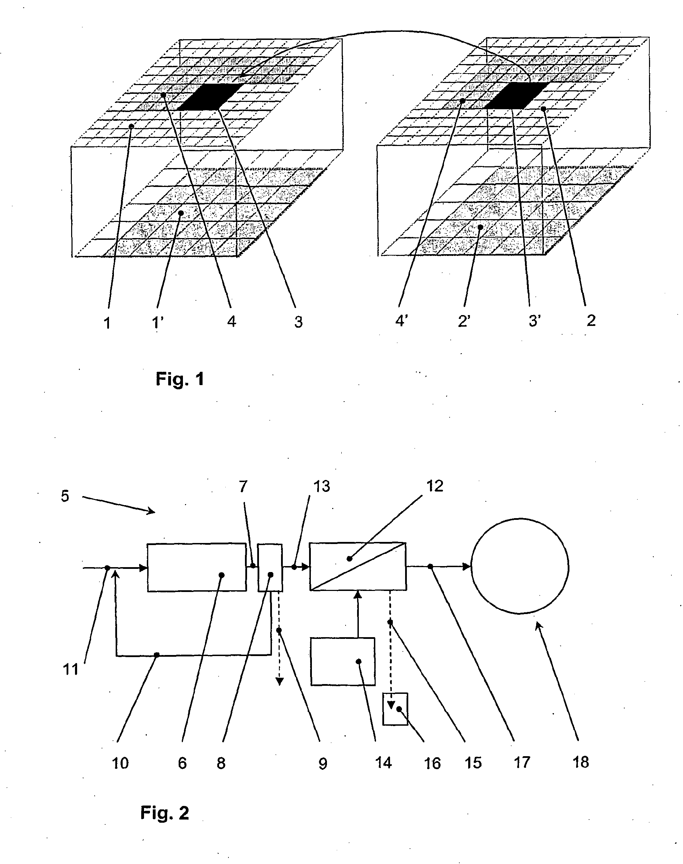

Anhand der Figuren 1 und 2 sollen das erfindungsgemäße Verfahren und die Vorrichtung noch einmal verdeutlicht werden.

Die Figur 1 zeigt hierbei noch einmal das Wesen des Nachbarschaftsvergleiches zur Ermittlung der Höheninformation der Reproduktionsoberfläche 1 . Ein erster Datensatz mit der Topologie einer begrenzten Originaloberfläche 2 wird abgespeichert, wobei der Datensatz aus den gemessenen Höheninformationen der jeweils zugehörigen Flächenelemente der Originaloberfläche besteht.

Danach wird ein anderer, ein "zweiter" Datensatz erzeugt und abgespeichert, der aus zufällig erzeugten Höheninformationen für jeweils zugehörige Flächenelemente einer nicht begrenzte Reproduktionsoberfläche 1 besteht. Die Originaloberfläche ist dabei - wie bereits beschrieben - wesentlich kleiner als die Reproduktionsoberfläche und zudem begrenzt. Zum leichteren Verständnis sind diese Größenunterschiede in der Darstellung nach Fig. 1 jedoch nicht enthalten, sodass die in der Fig. 1 gezeigten Oberflächen 1 und 2 tatsächlich und der Einfachheit halber nur Teile der jeweiligen gesamten Oberflächen darstellen.

Der nächste Verfahrensschritt (c) besteht darin, dass um eine erste Höheninformation der Reproduktionsoberfläche, d.h. um ein mit einer Höheninformation belegtes beliebig ausgewähltes erstes Flächenelement 3 der Reproduktionsoberfläche 1, mehrere benachbarte und zu einer Gruppe von L-förmig angeordneten Flächenelementen 4 gehörige zufällige Höheninformationen zu einer ersten Teilmenge zusammengefasst und in einem dritten Datensatz gespeichert werden. Das Flächenelement 3 besteht hierbei aus 9 (3x3) einzelnen Flächenteilen (Pixeln), die Gruppe von von L-förmig angeordneten Flächenelementen 4 aus insgesamt 36 einzelnen Flächenteilen (Pixeln).

Lage und Anordnung der benachbarten Höheninformationen der Flächenelemente 4 werden ebenfalls gespeichert, nämlich durch die Koordinaten der jeweils zugehörigen Flächenelemente 4 der Reproduktionsoberfläche 1. Der dritte Datensatz beinhaltet somit Daten der Reproduktionsoberfläche.

Dannach wird dieser dritte Datensatz mit einem vierten Datensatz verglichen. In dem vierten Datensatz sind eine Gruppe benachbarter gemessener und zu einer Gruppe von L-förmig angeordneten Flächenelementen 4' gehörige Höheninformationen der Originaloberfläche 2 als zweite Teilmenge gespeichert.

Ebenfalls gespeichert durch die Koordinaten der jeweils zugehörigen Flächenelemente 4' sind auch die Lage und Anordnung der benachbarten Höheninformationen der Originaloberfläche 2. Der vierte Datensatz beinhaltet somit Daten der Originaloberfläche.

Es findet sodann ein Vergleich der Umgebungen, der Nachbarschaften als solche statt, d.h. der jeweils benachbarten Höheninformationen der Gruppen von Flächenelementen 4 und 4'. Gleichzeitig erfolgt ein Vergleich mit den bereits im vorgehenden Durchlauf der Verfahrensschritte a) bis f) gespeicherten benachbarten Höheninformationen 1' und 2', soweit diese bereits vorhanden sind und soweit die Verfahren der "Auflösungspyramide" bereits gestartet sind, d.h. soweit ein vorgehenden Durchlauf mit gröberem Raster bereits erfolgte.

Bei einer festgelegten Ähnlichkeit zwischen den Höheninformationen der ersten und zweiten Teilmenge, also der Höheninformationen der Gruppen von Flächenelementen 4 und 4', wird sodann die erste zufällige Höheninformation des Flächenelementes 3 der Reproduktionsoberfläche, d.h. der Höhenwert für den ersten betrachteten "Punkt" der Reproduktionsoberfläche, ersetzt durch eine zweite Höheninformation des Flächenelementes 3' der Originaloberfläche.

Hierdurch wird also in diesem Verfahrensschritt (e) ein Höhenwert für einen ersten "Punkt" der Reproduktionsoberfläche ersetzt durch einen Höhenwert eines anderen, eine zweiten ;,Punktes" auf der Originaloberfläche. Das Kriterium für die Auswahl des "Ersatzwertes" sind dabei "passende" Nachbarschaften aus der Reproduktionsfläche und der Originalfläche, passend nämlich im Hinblick auf ihre Höheninformationen und in Bezug zu ihrer Lage zum ersten und zweiten Punkt in der Reproduktions- und Originaloberfläche.

Die Figur 2 zeigt in Form einer einer Prinzipskizze den Aufbau einer Vorrichtung zur Durchführung des erfindungsgemäßen Verfahrens.

Die Vorrichtung 5 weist einen CO₂-Gaslaser mit einem zugehörigen Resonator 6 auf, aus dem der Laserstrahl 7 austritt. Eine erste Steuereinheit 8 zur Regelung und Konstanthaltung der Intensität des Laserstrahles 7 ist so aufgebaut ist, dass ein Teil 9 des Laserstrahles 7 ausgespiegelt und abhängig von der Intensität/Energie des ausgespiegelten Teiles 9 des Laserstrahles die Eingangsleistung des Lasers gesteuert wird. Hierdurch erreicht man eine direkt wirkende Rückkopplung 10 zur Konstanthaltung der Eingangsleistung 11 des Laserstrahles.

Eine nachgeschaltete zweite Steuereinheit 12 dient zur Modulation der Intensität des geregelten Laserstrahles 13 in Abhängigkeit von den durch die über die Verarbeitungseinheit 14 ermittelten Höheninformationen der Reproduktionsoberfläche. Die nachgeschaltete zweite Steuereinheit 12 spiegelt einen Teil 15 des geregelten Laserstrahles aus und läßt nur die Energie durch, die "gebraucht" wird zur Bearbeitung der Oberfläche. Diese zweite Steuereinheit zur Modulation der Intensität des geregelten Laserstrahles ist als Gitter ausgebildet, welches abhängig von Schwingungen seine Durchlässigkeit ändert.

Der ausgespiegelte Teil 15 des Laserstrahles wird im "Beam Dump" aufgefangen, wo er in andere Energieformen (Wärme) umgeformt und abgeleitet wird. Der modulierte Laserstrahl 17 ist auf die zu bearbeitende Polymeroberfläche einer Prägewalze 18 gerichtet, in diesem Fall auf eine Silikonoberfläche.

### Bezugszeichenliste

### (Teil der Beschreibung)

- 1, 1': Reproduktionsoberfläche
- 2, 2': Originaloberfläche
- 3, 3': Flächenelement
- 4, 4': Flächenelement
- 5.: Laser-Bearbeitungsvorrichtung
- 6.: Laser-Resonator
- 7.: Laserstrahl
- 8.: erste Steuereinheit
- 9.: ausgespiegelter Teil des Laserstrahles 7
- 10.: Rückkopplung
- 11.: Eingangsleistung
- 12.: zweite Steuereinheit
- 13.: geregelter Laserstrahl
- 14.: Verarbeitungseinheit
- 15.: ausgespiegelter Teil des Laserstrahles 13
- 16.: Beam Dump
- 17.: modulierter Laserstrahl
- 18.: Prägewalze

## Patentansprüche

1. Verfahren zur Herstellung von dreidimensional strukturierten Oberflächen von Gegenständen, wobei die Gegenstandsoberfläche mit Hilfe eines Bearbeitungswerkzeuges als Reproduktion einer dreidimensional strukturierten endlichen und durch Ränder begrenzten Originaloberfläche (2) erzeugt wird, wobei zunächst die Topologie der Originaloberfläche (2) mit Hilfe eines Abtastverfahrens ermittelt wird und die so ermittelten und im Wesentlichen aus den zu jedem Flächenelement (4') der Originaloberfläche (2) gehörigen Höhen bestehenden topologischen Daten zur elektronischen Steuerung eines Bearbeltungswerkzeug genutzt werden, vorzugsweise eines Lasers (17) zur Bearbeitung der dreidimensional strukturierten Gegenstandsoberfläche,
**dadurch gekennzeichnet, dass**
a) zunächst ein erster Datensatz mit der Topologie einer begrenzten Originaloberfläche (2) abgespeichert wird, wobei der Datensatz aus den gemessenen Höheninformationen der jeweils zugehörigen Flächenelemente (4') der Originaloberfläche besteht,
b) dass danach ein zweiter Datensatz abgespeichert wird, der einer zufällig erzeugten Topologie einer nicht begrenzten Reproduktionsoberfläche (1) entspricht, wobei der zweite Datensatz aus zufällig erzeugten Höheninformationen für jeweils zugehörige Flächenelemente der Reproduktionsoberfläche (1) besteht,
c) dass danach um eine erste zufällige Höhenlnformation der Reproduktionsoberfläche (1) mehrere benachbarte zufällige Höheninformationen zu einer ersten Teilmenge zusammengefasst und in einem dritten Datensatz gespeichert werden, wobei Lage und Anordnung der benachbarten Höheninformationen durch die Koordinaten der jeweils zugehörigen Flächenelemente (4) der Reproduktionsoberfläche (1) ebenfalls gespeichert werden,
d) dass danach der dritte Datensatz mehrfach mit einem bei jedem neuen Vergleich mit neuen Daten belegten vierten Datensatz verglichen wird, wobei
i) in dem vierten Datensatz eine zweite Teilmenge benachbarter gemessener Höheninformationen der Originaloberfläche (2) sowie durch die Koordinaten der Jeweils zugehörigen Flächenelemente (4') auch die Lage und Anordnung der benachbarten Höheninformationen der Originaloberfläche (2) gespeichert sind,
ii) wobei die relative Lage und Anordnung der benachbarten Höheninformationen der ersten und zweiten Teilmenge ähnlich, vorzugsweise identisch sind,
e) dass beim Erreichen einer festgelegten Ähnlichkeit zwischen der Höheninformation der ersten und den Höheninformationen der zweiten Teilmengen die erste zufällige Höheninformation der Reproduktionsoberfläche (1) ersetzt wird durch eine zweite Höheninformation der Originaloberfläche (2), die in ihrer Lage und Anordnung in Bezug auf die zweite Teilmenge der Lage und Anordnung der ersten Höheninformation in Bezug auf die erste Teilmenge entspricht,
f) dass die Verfahrensschritte c) bis e) so oft mit unterschiedlichen ersten und zweiten Teilmengen und sukzessive für alle Höheninformationen der Reproduktionsoberfläche (1) durchgeführt wird wiederholt werden, bis alle Höheninformationen der Reproduktionsoberfläche (1) sukzessive durch Höheninformationen aus der Originaloberfläche (2) ersetzt sind,
wobei zum Vergleich der Teilmengen im Verfahrensschritt d) die bereits mit Hilfe eines oder mehrerer vorlaufenden Verfahrensschritte e) in der Reproduktionsoberfläche (1) ersetzten Höheninformationen mit in die erste Teilmenge zur Durchführung des Verfahrensschrittes c) aufgenommen werden
g) dass nach einem Ersatz aller Höheninformationen der Reproduktionsoberfläche (1) durch Höheninformationen der Originaloberfiäche (2) im Verfahrensschritt f) die Verfahrensschritte a) bis f) ein oder mehrere weitere Male durchlaufen werden, wobei die den Höheninformationen jeweils zugehörigen Flächenelemente (4, 4') bei jedem weiteren Durchlauf verkleinert, Insbesondere halbiert werden, und wobei Im Verfahrensschritt e) als gleichzeitiges weiteres Kriterium das Erreichen einer festgelegten Ähnlichkeit zwischen der neuerlichen ersten Teilmenge und den bereits im vorgehenden Durchlauf der Verfahrensschritte a) bis f) gespeicherten benachbarten Höheninformationen geprüft wird,
h) dass nach Erreichen einer festgelegten Ähnlichkeit zwischen der Reproduktionsoberfläche (1) und der Originaloberfläche (2) die Höheninformationen der Reproduktionsoberfläche für die Steuerung des Bearbeitungswerkzeuges zur Bearbeitung der Gegenstandsoberfläche zur Verfügung gestellt werden.

2. Verfahren nach Anspruch 1, **dadurch gekennzeichnet, dass** die Topologie der Originaloberfläche mit Hilfe eines digitalen Abtastverfahrens ermittelt wird.

3. Verfahren nach Anspruch 1 oder 2, **dadurch gekennzeichnet, dass** die nicht begrenzte Reproduktionsoberfläche (1) als torodiale Fläche ausgebildet ist, Insbesondere als Oberfläche eines ringförmigen Torus mit im wesentlichen Kreisquerschnitt.

4. Verfahren nach Anspruch 1 bis 3, **dadurch gekennzeichnet, dass** die durch die Koordinaten der jeweils zugehörigen Flächenelemente (4, 4') bestimmte Lage und Anordnung der benachbarten Höheninformationen der Reproduktionsoberfläche (1) und der Originaloberfläche (2) als L-förmige Anordnung der benachbarten Höheninformationen ausgebildet ist.

5. Verfahren nach Anspruch 1 bis 4, **dadurch gekennzeichnet, dass** das Abtasten der Topologie der Originaloberfläche mit Hilfe optischer Verfahren erfolgt, vorzugsweise mit Hilfe eines Lichtmessverfahrens, bei dem das Abtasten der dreidimensionalen Oberflächenstruktur mit Hilfe eines Interferometers erfolgt.

6. Verfahren nach Anspruch 1 bis 5, **dadurch gekennzeichnet, dass** die Höhenmessung mit einer vertikalen Auflösung von 2 bis 100 nm erfolgt.

7. Verfahren nach Anspruch 1 bis 6, **dadurch gekennzeichnet, dass** das Abtasten der Topologie der Originaloberfläche mit einer lateralen Auflösung von 1 bis 100 µm, vorzugsweise mit einer lateralen Auflösung von 5 bis 40 µm erfolgt.

8. Verfahren nach Anspruch 1 bis 7, **dadurch gekennzeichnet, dass** die dreidimensional strukturierte Gegenstandsoberfläche invers zur Originaloberfläche ausgebildet ist.

9. Verfahren nach einem oder mehreren der Ansprüche 1 bis 8, **dadurch gekennzeichnet, dass** die den jeweils zugehörigen Flächenelementen (4, 4') zugeordneten Höheninformationen in Form von Farbinformationen für die einzelnen Flächenelemente umgeformt und gespeichert werden, insbesondere in Form von Grauwerten für die einzelnen Flächenelemente, und bei dem nach Durchführung der Verfahrensschritte a) bis f) die Farbinformationen bzw. die Grauwerte der Reproduktionsoberfläche in korrespondierende Höheninformationen umgeformt und für die Steuerung des Bearbeitungswerkzeuges zur Bearbeitung der Reproduktion zur Verfügung gestellt werden.

10. Verfahren nach Anspruch 1 bis 9, **dadurch gekennzeichnet, dass** die Koordinaten der für die Steuerung des Bearbeitungswerkzeuges genutzten Höheninformationen der Reproduktionsoberfläche bzw. die Lage und Anordnung der jeweils zugehörigen Flächenelemente in den Flächenbereichen verdichtet oder gedehnt werden, In denen bei einem späteren Bearbeitungs- oder Umformungsvogang eine Dehnung oder Stauchung der Gegenstandsoberfläche erfolgt.

11. Verwendung des Verfahrens nach Anspruch 1 bis 10 zur Herstellung von stoßkantenfreien Dekor-Oberflächen auf Folien, insbesondere auf thermoplastischen und/oder elastomeren Polymerfollen oder polymerbeschichteten Flächengebilden, **dadurch gekennzeichnet, dass** die Reproduktionsoberfläche als geschlossene, Insbesondere torodiale Walzenoberfläche ausgebildet ist, wobei
a) zunächst die dreidimensional strukturierte Gegenstandsoberfläche mit Hilfe eines Lasers als Bearbeitungswerkzeug in eine mit einer Außenschicht aus Polymermaterial versehene Hilfswalze eingebracht wird, die damit die Positivform der Originaloberfläche erhält,
b) danach auf diese Hilfswalze ein Silikonkautschuk aufgetragen und vulkanisiert wird,
c) der so entstandene Schlauch aus Silikonkautschuk dann von der Hilfswalze abgezogen wird, Indem das Innere des (Silikon-) Schlauches nach außen gekrempelt wird.
d) der so umgekrempelte und mit der Negativform der Originaloberfäche auf der Außenseite versehene Silikonschlauch als Prägeschlauch auf eine Druckwalze / Prägewalze aufgezogen wird, wonach
e) mit der so entstandenen Druckwalze / Prägewalze die Oberfläche der Folie geprägt wird.

12. Verwendung des Verfahrens nach Anspruch 1 bis 10 zum Herstellen von Prägewalzen für thermoplastische Folien, **dadurch gekennzeichnet, dass** die Reproduktionsoberfläche als Walzenoberfläche ausgebildet Ist, wobei die dreidimensional strukturierte Gegenstandsoberfläche invers zur Originaloberfläche ausgebildet ist und mit Hilfe eines Lasers als Bearbeitungswerkzeug direkt in eine Außenschicht eines zylindrischen Körpers eingebracht wird, der damit auf seiner Außenseite die Negativform der Originaloberfläche erhält, wonach mit der Außenoberfläche des zylindrischen Körpers die Oberfläche der Folie geprägt wird.

13. Verwendung des Verfahrens nach Anspruch 12, **dadurch gekennzeichnet, dass** die inverse Oberfläche direkt in die Außenschicht einer Prägewalze eingebracht wird.

14. Verwendung des Verfahrens nach Anspruch 12, **dadurch gekennzeichnet, dass** der zylindrische Körper als Hohlzylinder ausgebildet ist, der auf eine entsprechende Druckwalze / Prägewalze aufgezogen wird.

15. Vorrichtung zur Durchführung des Verfahrens nach Anspruch 1 bis 10, wobei die Vorrichtung einen CO₂-Gas-Laser als Bearbeitungswerkzeug sowie eine Steuerungseinrichtung zur Steuerung der Intensität eines zur Bearbeitung einer Walzenoberfläche ausgerichteten Laserstrahls (17) aufweist, **dadurch gekennzeichnet, dass** die Steuerungseinrichtung eine erste Steuereinheit (8) aufweist zur Regelung und Konstanthaltung der Intensität/Energie des Laserstrahles (7), und dass die Steuerungseinrichtung eine nachgeschaltete zweite Steuereinheit (12) aufweist zur Modulation der Intensität des geregelten Laserstrahles (13) In Abhängigkeit von den durch die über eine Verarbeitungseinheit (14) ermittelten Höheninformationen der Reproduktionsoberfläche.

16. Vorrichtung nach Anspruch 15, **dadurch gekennzeichnet, dass** die erste Steuereinheit so aufgebaut ist, dass ein Teil (9) des Laserstrahles (7) ausgespiegelt und abhängig von der Intensität/Energie des ausgespiegelten Teiles des Laserstrahles die Eingangsleistung des Lasers gesteuert wird

17. Vorrichtung nach Anspruch 15 oder 16, **dadurch gekennzeichnet, dass** die nachgeschaltete zweite Steuereinheit (12) zur Regelung der Laserintensität einen Teil (15) des geregelten Laserstrahles (13) ausspiegelt, wobei die zweite Steuereinheit (12) zur Modulation der Intensität des geregelten Laserstrahles als Gitter ausgebildet ist, welches abhängig von Schwingungen seine Durchlässigkeit ändert.

## Claims

1. Method for producing three-dimensionally patterned surfaces of objects, wherein the object surface is produced with the aid of a machining tool as a reproduction of a three-dimensionally patterned finite original surface (2) that is delimited by edges, wherein first the topology of the original surface (2) is ascertained with the aid of a scanning method and the topological data thus ascertained, which consist substantially of the heights associated with each surface element (4') of the original surface (2), are used for electronically controlling a machining tool, preferably a laser (17) for machining the three-dimensionally patterned object surface,
**characterized in that**
a) first a first data set with the topology of a delimited original surface (2) is stored, wherein the data set consists of the measured height information of the respectively associated surface elements (4') of the original surface,
b) **in that** thereafter, a second data set is stored which corresponds to a randomly produced topology of a non-delimited reproduction surface (1), wherein the second data set consists of randomly produced height information for respectively associated surface elements of the reproduction surface (1),
c) **in that** thereafter, around a first random item of height information of the reproduction surface (1), a plurality of adjacent random items of height information are combined into a first subset and stored in a third data set, wherein position and arrangement of the adjacent items of height information are likewise stored by way of the coordinates of the respectively associated surface elements (4) of the reproduction surface (1),
d) **in that** thereafter, the third data set is compared a plurality of times with a fourth data set which is occupied by new data upon every new comparison, wherein
i) in the fourth data set, a second subset of adjacent items of measured height information of the original surface (2) and also by way of the coordinates of the respectively associated surface elements (4') the position and arrangement of the adjacent items of height information of the original surface (2) are also stored,
ii) wherein the relative position and arrangement of the adjacent items of height information of the first and second subsets are similar, preferably identical,
e) **in that** upon achieving a fixed similarity between the height information of the first subset and the height information of the second subset, the first random height information of the reproduction surface (1) is replaced with a second item of height information of the original surface (2), which corresponds in terms of its position and arrangement in relation to the second subset to the position and arrangement of the first item of height information in relation to the first subset,
f) **in that** the method steps c) to e) are repeated with different first and second subsets and successively for all height information of the reproduction surface (1) until all the items of height information of the reproduction surface (1) are successively replaced with height information from the original surface (2),
wherein, for comparison of the subsets in method step d), the height information which is already replaced in the reproduction surface (1) with the aid of one or more preceding method steps e) is included in the first subset for carrying out the method step c),
g) **in that**, after replacement of all the height information of the reproduction surface (1) with height information of the original surface (2) in method step f), the method steps a) to f) are performed one or more times, wherein the surface elements (4, 4'), which are respectively associated with the height information, are decreased, in particular halved, with each further performance, and wherein in method step e) as a simultaneous further criterion the achievement of a fixed similarity between the recent first subset and the adjacent items of height information already stored in the previous performance of method steps a) to f) is checked,
h) **in that**, after achieving a fixed similarity between the reproduction surface (1) and the original surface (2), the items of height information of the reproduction surface are made available for controlling the machining tool for machining the object surface.

2. Method according to Claim 1, **characterized in that** the topology of the original surface is ascertained with the aid of a digital scanning method.

3. Method according to Claim 1 or 2, **characterized in that** the non-delimited reproduction surface (1) is configured as a toroidal face, in particular as a surface of an annular torus having a substantially circular cross section.

4. Method according to Claim 1 to 3, **characterized in that** the position, determined by the coordinates of the respectively associated surface elements (4, 4'), and arrangement of the adjacent items of height information of the reproduction surface (1) and of the original surface (2) are configured as an L-shaped arrangement of the adjacent items of height information.

5. Method according to Claim 1 to 4, **characterized in that** the topology of the original surface is scanned with the aid of optical methods, preferably with the aid of a light metering method, in which the three-dimensional surface structure is scanned with the aid of an interferometer.

6. Method according to Claim 1 to 5, **characterized in that** the height is measured with a vertical resolution of 2 to 100 nm.

7. Method according to Claim 1 to 6, **characterized in that** the topology of the original surface is scanned with a lateral resolution of 1 to 100 µm, preferably with a lateral resolution of 5 to 40 µm.

8. Method according to Claim 1 to 7, **characterized in that** the three-dimensionally structured object surface is configured inversely with respect to the original surface.

9. Method according to one or more of Claims 1 to 8, **characterized in that** the height information, which is assigned to the respectively associated surface elements (4, 4'), is converted in the form of colour information for the individual surface elements and stored, in particular in the form of greyscale values for the individual surface elements, and in which after method steps a) to f) have been performed, the colour information or the greyscale values of the reproduction surface are converted into corresponding height information and made available for controlling the machining tool for machining the reproduction.

10. Method according to Claim 1 to 9, **characterized in that** the coordinates of the height information of the reproduction surface used for controlling the machining tool or the position and arrangement of the respectively associated surface elements are compressed or expanded in the surface regions in which an expansion or compression of the object surface takes place in a later machining or conversion process.

11. Use of the method according to Claim 1 to 10 for producing butt-edge-free decoration surfaces on films, in particular on thermoplastic and/or elastomeric polymer films or polymer-coated textile material, **characterized in that** the reproduction surface is configured as a closed, in particular toroidal roller surface, wherein
a) initially the three-dimensionally structured object surface is introduced, with the aid of a laser as machining tool, into a secondary roller provided with an external layer made of polymer material, which external layer thus receives the positive form of the original surface,
b) thereafter a silicone rubber is applied onto this secondary roller and vulcanized,
c) the sleeve of silicone rubber thus produced is then pulled off the secondary roller by way of turning the inside of the (silicone) sleeve inside out,
d) the thus reversed silicone sleeve, which is provided on the outside with the negative form of the original surface, is pulled onto an impression roller/embossing roller as embossing sleeve, after which
e) the impression roller/embossing roller thus produced is used to emboss the surface of the film.

12. Use of the method according to Claim 1 to 10 for producing embossing rollers for thermoplastic films, **characterized in that** the reproduction surface is configured as a roller surface, wherein the three-dimensionally structured object surface is configured inversely with respect to the original surface and is introduced, with the aid of a laser as machining tool, directly into an external layer of a cylindrical body which thus receives on its outside the negative form of the original surface, after which the external surface of the cylindrical body is used to emboss the surface of the film.

13. Use of the method according to Claim 12, **characterized in that** the inverse surface is introduced directly into the external layer of an embossing roller.

14. Use of the method according to Claim 12, **characterized in that** the cylindrical body is configured as a hollow cylinder which is pulled onto a corresponding impression roller/embossing roller.

15. Apparatus for carrying out the method according to Claim 1 to 10, wherein the apparatus has a CO₂-gas laser as machining tool and a control device for controlling the intensity of a laser beam (17) oriented for the machining of a roller surface, **characterized in that** the control device has a first control unit (8) for regulating and keeping constant the intensity/energy of the laser beam (7), and **in that** the control device has a second control unit (12) connected downstream for modulating the intensity of the regulated laser beam (13) as a function of the height information of the reproduction surface ascertained by means of a processing unit (14).

16. Apparatus according to Claim 15, **characterized in that** the first control unit is constructed such that a portion (9) of the laser beam (7) is reflected out and the input power of the laser is controlled as a function of the intensity/energy of the reflected-out portion of the laser beam.

17. Apparatus according to Claim 15 or 16, **characterized in that** the second control unit (12) which is connected downstream reflects out a portion (15) of the regulated laser beam (13) for regulating the laser intensity, wherein the second control unit (12) is configured as a grating for modulating the intensity of the regulated laser beam, which grating changes its transmissibility depending on oscillations.

## Revendications

1. Procédé pour réaliser sur des objets des surfaces structurées en trois dimensions, la surface de l'objet étant formée à l'aide d'un outil d'usinage en tant que reproduction d'une surface d'origine (2), structurée en trois dimensions, sans fin et délimitée par des bords,
la topologie de la surface d'origine (2) étant d'abord déterminée à l'aide d'une opération de palpage et les données topologiques constituées essentiellement des hauteurs qui appartiennent à chaque élément de surface (4') de la surface d'origine (2) étant utilisées pour commander électroniquement un outil d'usinage, de préférence un laser (17), qui usine la surface structurée en trois dimensions de l'objet, **caractérisé en ce que**
a) un premier jeu de données qui contient la topologie d'une surface d'origine (2) limitée est d'abord conservé en mémoire, le jeu de données étant constitué des informations de hauteur mesurées de chacun des éléments de surface (4') associés de la surface d'origine,
b) **en ce qu'**ensuite, un deuxième jeu de données qui correspond à une topologie formée aléatoirement d'une surface de reproduction (1) non limitée est conservé en mémoire, le deuxième jeu de données étant constitué d'informations de hauteur créées aléatoirement pour chacun des éléments de surface associés de la surface de reproduction (1),
c) **en ce qu'**ensuite, autour d'une première information de hauteur aléatoire de la surface de reproduction (1), plusieurs informations de hauteur aléatoires voisines sont rassemblées en une première quantité partielle et sont conservées dans un troisième jeu de données, la position et l'agencement des informations de hauteur voisines étant également conservés par les coordonnées de chacun des éléments de surface (4) associés de la surface de reproduction (1),
d) **en ce qu'**ensuite, le troisième jeu de données est comparé plusieurs fois à un quatrième jeu de données occupé par de nouvelles données lors de chaque nouvelle comparaison,
i) une deuxième quantité partielle d'informations de hauteur voisines mesurées de la surface d'origine (2) étant conservée dans le quatrième jeu de données ainsi que la position et l'agencement des informations de hauteur voisines de la surface d'origine (2) par les coordonnées de chacun des éléments de surface (4') associés,
ii) la position relative et l'agencement des informations de hauteur voisines de la première et de la deuxième quantité partielle étant similaires et de préférence identiques,
e) **en ce que** lorsque l'on atteint une similitude définie entre l'information de hauteur de la première quantité partielle et les informations de hauteur de la deuxième quantité partielle, la première information de hauteur aléatoire de la surface de reproduction (1) est remplacée par une deuxième information de hauteur de la surface d'origine (2) dont la position et l'agencement par rapport à la deuxième quantité partielle correspond à la position et l'agencement de la première information de hauteur par rapport à la première quantité partielle,
f) **en ce que** les étapes de traitement c) à e) sont répétées avec des premières et des deuxièmes quantités partielles différentes et successivement pour toutes les informations de hauteur de la surface de reproduction un nombre suffisant de fois pour que toutes les informations de hauteur de la surface de reproduction (1) soient remplacées successivement par des informations de hauteur provenant de la surface d'origine (2) et **en ce que** pour comparer les quantités partielles à l'étape de traitement d), les informations de hauteur déjà remplacées à l'aide d'une ou plusieurs étapes de traitement e) précédemment exécutées dans la surface de reproduction (1) sont reprises dans la première quantité partielle pour exécuter l'étape de traitement c),
g) **en ce qu'**après le remplacement de toutes les informations de hauteur de la surface de reproduction (1) par des informations de hauteur de la surface d'origine (2) dans l'étape de traitement f), les étapes de traitement a) à f) sont exécutées une ou plusieurs autres fois, chacun des éléments de surface (4, 4') associés aux informations de hauteur étant diminué lors de chaque nouvelle passe, et en particulier divisé par deux, et dans l'étape de traitement e), on vérifie comme autre critère simultané l'atteinte d'une similitude définie entre la nouvelle première quantité partielle et les informations de hauteur voisines déjà conservées au cours du passage précédent par les étapes de traitement a) à f) et
h) **en ce qu'**après qu'une similitude définie a été atteinte entre la surface de reproduction (1) et la surface d'origine (2), les informations de hauteur de la surface de reproduction sont délivrées à la commande de l'outil d'usinage pour qu'il usine la surface de l'objet.

2. Procédé selon la revendication 1, **caractérisé en ce que** la topologie de la surface d'origine est déterminée à l'aide d'un procédé numérique de palpage.

3. Procédé selon la revendication 1 ou 2, **caractérisé en ce que** la surface de reproduction (1) non limitée est configurée comme surface toroïdale et en particulier comme surface d'un tore annulaire à section transversale essentiellement circulaire.

4. Procédé selon les revendications 1 à 3, **caractérisé en ce que** la position et l'agencement, définis par les coordonnées de chacun des éléments de surface (4, 4') associé, des informations de hauteur voisines de la surface de reproduction (1) et de la surface d'origine (2) sont configurées comme agencement en L des informations de hauteur voisines.

5. Procédé selon les revendications 1 à 4, **caractérisé en ce que** le palpage de la topologie de la surface d'origine s'effectue au moyen d'un procédé optique, de préférence à l'aide d'un procédé de mesure par la lumière dans lequel le palpage de la structure tridimensionnelle de surface s'effectue à l'aide d'un interféromètre.

6. Procédé selon les revendications 1 à 5, **caractérisé en ce que** la mesure des hauteurs s'effectue à une résolution verticale de 2 à 100 nm.

7. Procédé selon les revendications 1 à 6, **caractérisé en ce que** le palpage de la topologie de la surface d'origine s'effectue à une résolution latérale de 1 à 100 µm et de préférence à une résolution latérale de 5 à 40 µm.

8. Procédé selon les revendications 1 à 7, **caractérisé en ce que** la surface de l'objet structurée en trois dimensions est configurée à l'inverse de la surface d'origine.

9. Procédé selon l'une ou plusieurs des revendications 1 à 8, **caractérisé en ce que** les informations de hauteur associées à chacun des éléments de surface (4, 4') associé sont converties en forme d'informations de couleur pour les différents éléments de surface et en particulier sous la forme des valeurs de gris des différents éléments de surface, et **en ce qu'**après l'exécution des étapes de procédé a) à f), l'information de couleur ou les valeurs de gris de la surface de reproduction sont converties en informations de hauteur correspondantes et sont délivrées à la commande de l'outil d'usinage pour l'usinage de reproduction.

10. Procédé selon les revendications 1 à 9, **caractérisé en ce que** les coordonnées des informations de hauteur, utilisées pour la commande de l'outil d'usinage, de la surface de reproduction ainsi que la position et l'agencement de chacun des éléments de surface associés sont comprimés ou allongés dans les parties de surface dans lesquelles un allongement ou un écrasement de la surface de l'objet a lieu lors d'une opération ultérieure d'usinage ou de conversion.

11. Utilisation du procédé selon les revendications 1 à 10 pour former des surfaces décoratives sans jonction sur des feuilles, en particulier sur des feuilles de polymère thermoplastiques et/ou élastomères ou des produits plats revêtus de polymère,
**caractérisée en ce que**
la surface de reproduction est configurée comme surface cylindrique fermée, en particulier toroïdale, et **en ce que**
a) à l'aide d'un laser qui sert d'outil d'usinage, la surface structurée en trois dimensions de l'objet est d'abord formée dans un cylindre auxiliaire doté d'une couche extérieure en matériau polymère qui reçoit ainsi la forme positive de la surface d'origine,
b) ensuite, un caoutchouc au silicone est appliqué sur ces cylindres auxiliaires et est vulcanisé,
c) le tuyau flexible en caoutchouc au silicone ainsi obtenu est alors retiré du cylindre auxiliaire en retournant vers l'extérieur l'intérieur du tuyau flexible (en silicone),
d) le tuyau flexible en silicone ainsi retourné et doté de la forme négative de la surface d'origine sur son côté extérieur est appliqué en tant que tuyau flexible de gaufrage sur un cylindre d'impression ou de gaufrage, suite à quoi
e) la surface de la feuille est gaufrée à l'aide du cylindre d'impression ou de gaufrage ainsi obtenu.

12. Utilisation du procédé selon les revendications 1 à 10 pour former des cylindres de gaufrage de feuilles thermoplastiques, **caractérisée en ce que** la surface de reproduction est configurée comme surface cylindrique, la surface structurée en trois dimensions de l'objet ayant une forme inverse à celle de la surface d'origine et étant formée directement à l'aide d'un laser utilisé comme outil d'usinage dans une couche extérieure d'un corps cylindrique qui reçoit ainsi sur son côté extérieur la forme négative de la surface d'origine, suite à quoi la surface de la feuille est gaufrée à l'aide de la surface extérieure du corps cylindrique.

13. Utilisation du procédé selon la revendication 12, **caractérisée en ce que** la surface inversée est appliquée directement dans la couche extérieure d'un cylindre de gaufrage.

14. Utilisation du procédé selon la revendication 12, **caractérisée en ce que** le corps cylindrique est configuré comme cylindre creux enfilé sur un cylindre d'impression ou de gaufrage correspondant.

15. Dispositif en vue de l'exécution du procédé selon les revendications 1 à 10, le dispositif présentant un laser au CO₂ gazeux utilisé comme outil d'usinage ainsi qu'un dispositif de commande qui commande l'intensité d'un faisceau laser (17) orienté de manière à usiner la surface d'un cylindre,
**caractérisé en ce que**
le dispositif de commande présente une première unité de commande (8) qui régule et maintient constantes l'intensité et/ou l'énergie du faisceau lasser (7) et
**en ce que** le dispositif de commande présente une deuxième unité de commande (12) aval qui module l'intensité du faisceau laser (13) régulé en fonction des informations de hauteur, déterminées par une unité de traitement (14), de la surface de reproduction.

16. Dispositif selon la revendication 15, **caractérisé en ce que** la première unité de commande est constituée de manière à extraire par réflexion une partie (9) du faisceau laser (7) et de commander la puissance d'entrée du laser en fonction de l'intensité et/ou de l'énergie de la partie du faisceau laser extraite par réflexion.

17. Dispositif selon la revendication 15 ou 16, **caractérisé en ce que** la deuxième unité de commande (12) raccordée en aval extrait par réflexion une partie (15) du faisceau laser (13) régulé, en vue de la régulation de l'intensité laser, la deuxième unité de commande (12) étant configurée pour moduler l'intensité du faisceau laser régulé sous la forme d'une grille qui varie en fonction des oscillations de sa transparence.
